# EUROPÄISCHE PATENTSCHRIFT

(11) **EP 0 700 796 B1**
(45) Veröffentlichungstag und Bekanntmachung des Hinweises auf die Patenterteilung: **29.12.1999**
(21) Anmeldenummer: 95114240.5
(22) Anmeldetag: 11.09.1995
(51) Int. Cl.: B44C 1/26, C04B 35/622

(54) **Verfahren zur Herstellung mehrfarbiger Keramikformteile**
Process of manufacture of multicoloured ceramic shaped bodies
Procédé de préparation de corps céramiques formés multicolores

(30) Priorität: 12.09.1994 DE 4432459
(43) Veröffentlichungstag der Anmeldung: 13.03.1996
(73) Patentinhaber: BASF AKTIENGESELLSCHAFT, 67056 Ludwigshafen (DE)
(72) Erfinder: Hesse, Werner, D-67283 Obrigheim (DE); Tommuscheit, Birgit, D-67056 Ludwigshafen (DE)
(74) Vertreter: Isenbruck, Günter, Dr.

(56) Entgegenhaltungen:
- EP-A- 0 227 029
- DATABASE WPI Week 8008 Derwent Publications Ltd., London, GB; AN 80-14079c & JP-A-55 003 315 (KYOTO CERAMIC KK.) , 24.Januar 1980
- DATABASE WPI Week 8414 Derwent Publications Ltd., London, GB; AN 84-085226 & JP-A-59 035 063 (KYOCERA CORP.) , 25.Februar 1985

## Beschreibung

Die Erfindung bezieht sich auf ein Verfahren zur Herstellung mehrfarbiger Keramikformteile, auf mehrfarbige Keramikformteile und Keramikformteilgrünlinge.

Farbige Keramikformteile können durch Sintern eines Granulats hergestellt werden. Farbgebende Teilchen werden dabei mit dem Keramikpulver und gegebenenfalls Sinterhilfsmitteln zu einem Granulat vermischt. Unter farbgebenden Teilchen versteht man dabei Teilchen, die bereits vor dem Sintern die gewünschte Farbe besitzen oder die gewünschte Farbe erst während des Sintervorgangs ausbilden. Die Vermischung der Komponenten erfolgt durch einen Mahlprozeß oder durch Auffällung aus einer Lösung. In beiden Fällen muß das Gemisch anschließend getrocknet werden, bei der Auffällung einer Lösung ist häufig die Calcinierung des Pulvergemisches nötig. Die Formgebung kann durch kalt- oder heiß isostatisches Pressen erfolgen. Nach dem Versintern erhält man dann ein einfarbiges Keramikformteil. Diese beiden Arten der Farbgebung sind mit einem erheblichen technischen Aufwand verbunden.

Ein spezielles Verfahren zur Herstellung rubinrot gefärbter Aluminiumoxidkeramik wird in dem tschechoslowakischen Patent CS 191 122 beschrieben. Das Granulat besteht dabei aus einer Mischung aus Aluminiumoxidkeramikpulver und einem Bindemittel. Nach der Vermischung wird dieses Granulat spritzgegossen. Die Färbung der Formteile erfolgt durch Tränkung mit einer Chromchloridlösung nach einer teilweisen Entfernung des Bindemittels. Anschließend wird das getränkte Formteil versintert. Nachteilig ist allerdings, daß beim Tränken und anschließenden Trocknen Entmischungserscheinungen auftreten, weil das Chromchlorid überwiegend an der Oberfläche absorbiert wird, obwohl das Lösungsmittel in das Formteil voll eindringt. Eine homogene Farbverteilung ist damit nicht erreichbar.

Die JP-A 55 003 315 offenbart ein Verfahren zur Herstellung mehrfarbiger Keramikformteile durch Mischen von mindestens 2 Granulaten, Formen und Sintern. Die Granulate enthalten Keramikmasse, farbgebende Teilchen und optional einen Binder, zum Beispiel Polyvinylalkohol. Die Herstellung von gleichmäßig gefärbten Granulaten erfolgt durch aufwendiges Mahlen der Komponenten des Granulats in einer Kugelmühle.

Die JP-A 59 035 063 offenbart ein Verfahren zur Herstellung von Keramik zur Dekoration. Es werden spezielle Granulate eingesetzt, die hochreines Aluminium-Pulver, eine sogenannte 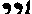 goldene Komponente" aus Pulver, Granulat oder Splittern von TiN, TaC, ZrN, TaN und/oder HfN und so weiter, mit einigen Prozenten eines metallischen Bindemittels enthalten. Um das Granulat verpressen zu können, werden geringe Mengen von Paraffinwachs zugegeben. Dieses Verfahren dient zur Herstellung ganz spezieller Keramiken mit goldfarbenem, gesprenkeltem oder gemustertem Glanz.

Aufgabe der Erfindung ist deshalb die Bereitstellung eines Verfahrens zur Herstellung mehrfarbiger Keramikformteile mit guten Eigenschaften der Farbgebung und Farbverteilung. Insbesondere soll die Erzeugung einer definierten Grenzfläche zwischen den Farbphasen ermöglicht werden. Dieses Verfahren soll einfach und flexibel sein. Eine weitere Aufgabe der Erfindung ist die Bereitstellung mehrfarbiger Keramikformteile sowie von Keramikformteilgrünlingen.

Die Erfindung geht aus von einem Verfahren zur Herstellung mehrfarbiger Keramikformteile aus mindestens 2 Granulaten, die jeweils Keramikpulver, farbgebende Teilchen und gegebenenfalls Bindemittel enthalten, in dem die Granulate geformt, gegebenenfalls entbindert und versintert werden. Das erfindungsgemäße Verfahren ist dadurch gekennzeichnet, daß die Granulate unterschiedliche farbgebende Teilchen und/oder eine unterschiedliche Konzentration derselben fargebenden Teilchen enthalten, wobei in mindestens einem der Granulate die farbgebenden Teilchen einem Anteil an dem Granulat von 0,05 Gew.-% bis 20 Gew.-% haben, und die Granulate als Bindemittel Polyacetale enthalten, wobei in mindestens einem der Granulate diese Bindemittel einen Anteil an dem Granulat von 30 Vol.-% bis 60 Vol.-% haben.

Die Granulate werden zusammen oder getrennt aufgeschmolzen die Schmelzen zusammengebracht und dabei entweder überhaupt nicht oder nur schwach durchmischt und anschließend gemeinsam zu einem grünen Formkörper (Grünling) verformt. Aus dem Grünling wird dann das Bindemittel entfernt und der entbinderte Grünling wird zu dem verwendungsfähigen Formkörper versintert.

Farbgebende Teilchen sind solche Teilchen, die bereits bei der Mischung des Granulats farbig sind oder ihre Farbe erst während des Herstellungsverfahrens, insbesondere während des Sinterprozesses, entfalten. Bevorzugte farbgebende Teilchen sind Metallpulver, Metalloxidpulver, deren Precursorverbindungen, die bei Wärmezufuhr Metalloxide bilden, Farbpigmente oder Mischungen aus diesen Materialien. Besonders bevorzugt ist die Verwendung von Lanthaniden oder deren Oxiden, von Metallen der Gruppe Co, Cr, Cu Fe, Mn, Mo, Nb, Ni, Pb, Si, Sn, Ti, V, W oder deren Oxiden, insbesondere von Oxiden der Gruppe CoO, Co₂O₃, Co₃O₄, Cr₂O₃, Cu₂O, CuO, Fe₂O₃, Fe₃O₄, MnO, Mn₂O₃, MnO₂, MoO₂, MoO₃, NbO, NbO₂, Nb₂O₅, NiO, PbO, PbO₂, SiO₂, SnO, SnO₂, TiO, Ti₂O₃, TiO₂, VO₂, V₂O₅, WO₂, W₂O₅, WO₃. Besonders bevorzugt ist auch die Verwendung von Metallsalzen oder Metallkomplexen, insbesondere von Carboxylaten, Carbonaten, Nitraten oder Acetylacetonaten, die beim Sintern in die farbgebenden Oxide übergehen. Ebenso ist die Verwendung von Buntpigmenten aus den Kristallstrukturklassen Baddelleyt, Hämatit, Kassiterit, Korund, Olivin, Rutil, Sphen, Spinell und Zirkon als farbgebende Teilchen bevorzugt. Das Granulat kann dabei mehrere verschiedene farbgebende Teilchen enthalten. Dadurch kann eine Vielzahl neuer Farben kreiiert werden. Farbmodifikationen können auch dadurch erreicht werden, daß mit Metallpulvern anstatt Metalloxidpulvern gearbeitet wird. Die Farbe nach dem Sintern in oxidierender Atmosphäre ist bei der Verwendung von Metallpulvern häufig deutlich leuchtender als bei dem Einsatz des entsprechenden Metalloxidpulvers.

Bevorzugt weisen die farbgebenden Teilchen Korngrößen unter 10 µm, weiter bevorzugt unter 5 µm auf. Die farbgebenden Teilchen haben vorzugsweise einen Gewichtsanteil an der verwendeten Granulatmasse bzw. an einer Feedstockmasse für das Spritzgußverfahren von 0,05% bis 20%.

In einer anderen bevorzugten Ausführungsform enthält das Keramikpulver Aluminiumoxid, Zirkoniumoxid, Yttriumoxid, Ceroxid, Magnesiumoxid, SiC, Si₃N₄ oder eine Kombination bzw. ein Gemisch davon. Dabei kann das Keramikpulver auch im wesentlichen aus einem dieser Materialien bestehen. So kann bei der Herstellung einer Aluminiumoxid- oder Zirkoniumoxidkeramik Yttriumoxid oder Magnesiumoxid als Stabilisierungs- oder Sinterhilfsmittel beigegeben werden.

Die Bindemittel sind Polyacetale, insbesondere Polyoxymethylene, sowie die Co- und Homopolymerisate von Polyoxymethylenen. Dabei kann auch eine Kombination mehrerer Bindemittel eingesetzt werden.

Neben dem Bindemittel kann das Spritzgußgranulat auch organische Additive zur Dispergierung und Oberflächenmodifikation enthalten. Zusätzlich können auch Netzmittel, Plastifiziermittel oder andere Hilfsmittel, die die rheologischen Eigenschaften der Granulate bei der Verformung beeinflussen, beigemengt werden.

Die Gemische aus Keramikpulver, Bindemittel und farbgebenden Teilchen werden üblicherweise bei Temperaturen von 115 bis 200°C geknetet oder extrudiert, anschließend abgekühlt und granuliert. Die erhaltenen Granulate können mit Hilfe üblicher Pressen oder Mehrkomponenterspritzgußmaschinen verarbeitet werden.

Die Mischung der verschiedenen Granulate kann dabei derart erfolgen, daß Keramikteile mit genauer Abgrenzung der verschiedenfarbigen Bereiche voneinander entstehen, es können aber auch marmorierte Teile dargestellt werden. Ebenso lassen sich Schriftzüge auf Keramikteilen aufformen und Verzierungen aller Art an der Oberfläche von Keramikformteilen erstellen.

Bei Temperaturen von typischerweise 175 bis 200°C und bei Drücken von 200 bis 2.000 bar wird die Mischung der Granulate anschließend verformt. Die entformten Grünlinge werden dann entbindert.

Das Verfahren der Entbinderung, d.h. der Entfernung des Bindemittels aus dem Keramikgrünling, richtet sich nach der Art des verwendeten Binders. Die Entfernung von Bindemitteln, die Polyacetale enthalten, wird vorzugsweise in gasförmiger, säurehaltiger oder Bortrifluorid enthaltender Atmosphäre vorgenommen.

Das Versintern der geformten und entbinderten Keramikformteile geschieht vorzugsweise in Luft, in Inertgasatmosphäre, in reduzierender Atmosphäre, im Vakuum oder bei einem bestimmten Sauerstoffpartialdruck. Bei einer bevorzugten Verfahrensvariante werden Keramikformteile bestimmter Farbgebung durch bestimmte Sinterbedingungen hergestellt. Durch die Wahl der Sinteratmosphäre kann ein Farbton in Nuancen oder sehr deutlich verändert werden. Letzteres ist etwa der Fall, wenn die Wertigkeitsstufe eines Metallkations verändert wird. So wird ein mit Eisenzirkonsilikat rosa gefärbter Grünkörper beim Sintern an der Luft braun, während er bei Sintern in reduzierender Atmosphäre grün wird. Ein mit fleischfarbenem Mn₂O₃ gefärbter Grünkörper wird in Inertgasatmosphäre rosa, in Luft schwarz.

Mehrere Granulate mit unterschiedlichen farbgebenden Teilchen oder unterschiedlichen Konzentrationen derselben farbgebenden Teilchenart werden bevorzugt im Mehrkomponenten-Spritzgußverfahren oder im Preßverfahren verarbeitet. Durch die Einstellung der Preßbedingungen kann bei letzterer Verfahrensart die gewünschte Schärfe der Farbtrennung an der Grenzfläche verschiedenfarbiger Bereiche der Keramikformteile erzeugt werden. Die gezielte Veränderung von Preßzeit, Preßtemperatur und Preßdruck führt zu scharfen oder verlaufenden Farbgrenzen. Auch die gewählten Sinterbedingungen sind von Bedeutung für die Ausbildung der Grenzphasen. Da es beim Sintern zur Diffusion von Ionen kommt, ist die Grenzzone zweier Farben umso verwaschener, je länger die Sinterdauer und je höher die Sintertemperatur ist.

Vorzugsweise weisen die mehreren verarbeiteten Granulate gleichen Volumenfüllgrad auf. Dadurch wird ein gleicher Schrumpf der unterschiedlichen Farbphasen beim Sintern gewährleistet, was die Wahrscheinlichkeit eines Reißens der Keramik entlang der Berührungspunkte zweier Phasen vermindert. Die Rißgefahr an Phasengrenzflächen kann im übrigen auch durch eine kristallchemische Anpassung der verschiedenfarbigen Phasen herabgesetzt werden. Das wird z. B. durch den Einbau geeigneter Kationen in einen bestimmten Strukturtyp erreicht.

Die Aufgabe, mehrfarbige Keramikformteile bereitzustellen, wird erfindungsgemäß dadurch gelöst, daß Keramikteile bereitgestellt werden, die aus mindestens zwei geformten, entbinderten und versinterten Granulaten, wie sie oben beschrieben wurden, bestehen. Bevorzugt sind die mehrfarbigen Keramikformteile nach einem Verfahren hergestellt, wie es in den Verfahrensansprüchen beschrieben ist. Die mehrfarbigen Keramikformteile sind vorzugsweise als dekorative Teile, insbesondere als Bestandteile von Uhren, Schmuck (Ringe, Ketten, Manschettenknöpfe, Broschen, Krawattennadeln, Armbänder, etc.), Schreibgeräten, Werkzeugen, Haushaltsgeräten, Türbeschlägen, Feuerzeugen, Vasen, Lampen, Knöpfe, Kultgegenstände (Kruzifixe, Heiligenfiguren, Rosenkränze) oder als Fliesen ausgebildet.

Aufgabengemäß werden auch Keramikformteilgrünlinge bereitgestellt, die aus mindestens zwei geformten Granulaten, die Keramikpulver, Bindemittel und farbgebende Teilchen enthalten, geformt sind. Dabei enthalten die Granulate unterschiedliche farbgebende Teilchen und/oder eine unterschiedliche Konzentration derselben farbgebenden Teilchen. Bevorzugt sind solche Keramikformteilgrünlinge nach einem Verfahren nach einem der Verfahrensansprüche geformt. Grünlinge sind Formteile, die noch nicht entbindert und versintert sind.

### Beispiel 1

Ein Spritzgußgranulat enthielt 1000 g Zirkoniumdioxid, das mit 3 Mol% Y₂O₃ stabilisiert war. Die mittlere Teilchengröße betrug 0,3 µm. Beigemengt wurden 17 g Polyethylenglykol mit einem Molgewicht von ca. 800, 23 g Polybutandiolformal mit einem Molgewicht von ca. 80.000 und 168 g Polyoxymethylen mit 2 Gew.-% Butandiolformal. Als farbgebendes Material wurde im ersten Fall 20 g FeCrNi-Spinell (schwarz) und im zweiten Fall 14 g CoAl-Spinell beigegeben. Die erhaltenen Massen wurden jeweils in einem Kneter gemischt und mit 300 ml Butylglykol versetzt. Die Mischungen wurden unter Aufheizen weiter geknetet, wobei das Lösungsmittel langsam abgezogen wurde. Anschließend wurde noch eine Stunde bei ca. 175°C geknetet, danach abgekühlt und die Mischungen granuliert.

Die verschiedenfarbigen Massen wurden in einer rechteckigen Preßform (60 x 20 x 4 mm) verteilt und bei einer Temperatur von 180°C unter einem Druck von 300 bar durch Axialpressung verformt. Die Verteilung erfolgte einmal willkürlich, ein anderes Mal wurden die verschiedenfarbigen Massen strikt getrennt, und in einem weiteren Versuch wurde die eine Masse in die rechteckige Preßform eingefüllt und auf dieser mit einer Schablone der Schriftzug "BASF", bestehend aus der anderen Masse, aufgebracht.

Die so erhaltenen Formteile wurden mit gasförmiger Oxalsäure bei 130°C säurekatalytisch entbindert. Das anschließende Sintern erfolgte bei 1500°C an Luft, wobei die Haltezeiten zwischen 20 Minuten und 4 Stunden variiert wurden. In allen Fällen wurden Keramikteile mit Dichten von mehr als 6 g/ml erhalten, die frei von Rissen oder Verzug waren. In Abhängigkeit von den Sinterzeiten wiesen die Proben verschieden breite Übergangszonen zwischen den verschiedenfarbigen Bereichen auf. Bei einer Haltezeit von 20 Minuten war fast keine Übergangszone erkennbar, bei 4 Stunden Haltezeit war eine Vermischungszone von 3,5 mm Breite erkennbar.

### Beispiel 2

Aus den beiden verschiedenfarbigen Spritzgußgranulaten nach Beispiel 1 wurden mit Hilfe einer Spritzgußmaschine mit Spezialschnecke zur Erzeugung eines Marmoreffektes bei 170°C Massetemperatur und 135°C Formtemperatur runde marmorierte Scheiben mit einem Durchmesser von 10 cm und einer Dicke von 5 mm gespritzt. Das Versintern bei 1500°C in einer Argonatmosphäre statt an Luft führte zu einem deutlich leuchtenderen Blauton, während das Schwarz unverändert blieb.

### Beispiel 3

700 g Aluminiumoxid mit einer mittleren Korngröße von 0,8 µm wurden mit 15 g Cr₂O₃-Pulver bzw. 15 g Co₂O₃-Pulver und den übrigen Binderkomponenten und Additiven wie in Beispiel 1 zu je einem Granulat verarbeitet. Wie in Beispiel 1 wurden dann Preßstücke geformt, die jeweils die beiden verschiedenfarbigen Massen enthielten. Anschließend wurden sie entbindert und bei 1650°C an Luft gesintert. Die erhaltenen Farben waren rosa und blau, da das grüne Cr₂O₃ in das Korundgitter eingebaut wird und so die rosarote Farbe des Rubins annimmt. Die Oberfläche sah matt-glänzend aus.

### Beispiel 4

1000 g Yttrium-stabilisiertes Zirkonoxid wurde mit 18 g Pr-Zirkonsilikat und den übrigen Binderkomponenten und Additiven wie im Beispiel 1 zu einem Granulat verarbeitet. Beim Spritzgießen wurde eine Vermischung dieses Granulats mit den in Beispiel 1 beschriebenen Granulaten vorgenommen. Nach dem Entbindern wurden die Grünlinge bei 1500°C an Luft gesintert. Die erhaltenen Keramikformteile waren vierfarbig. Neben den reinen Farben gelb, schwarz und blau trat zwischen der gelben und der blauen Phase ein breiter hellblauer Bereich auf.

## Patentansprüche

1. Verfahren zur Herstellung mehrfarbiger Keramikformteile aus mindestens 2 Granulaten, die jeweils Keramikpulver, farbgebende Teilchen und gegebenenfalls Bindemittel enthalten, in dem die Granulate geformt, gegebenenfalls entbindert und versintert werden, dadurch gekennzeichnet, daß in beiden Granulaten sowohl Bindemittel aus der Gruppe der Polyacetale, die in mindestens einem der Granulate einen Anteil an dem Granulat von
30 bis 60 Vol.- % haben, als auch unterschiedliche farbgebende Teilchen und/oder unterschiedliche Konzentrationen derselben farbgebenden Teilchen enthalten sind.

2. Verfahren nach Anspruch 1, dadurch gekennzeichnet, daß in mindestens einem der Granulate die farbgebenden Teilchen einen Anteil von 0,05 bis 20 Gew.-% haben.

3. Verfahren nach einem der Ansprüche 1 oder 2, dadurch gekennzeichnet, daß in mindestens einem der Granulate die farbgebenden Teilchen Korngrößen von unter 10 µm aufweisen.

4. Verfahren nach einem der Ansprüche 1 bis 3, dadurch gekennzeichnet, daß die Granulate in einem Mehrkomponenten-Spritzgußverfahren verarbeitet werden.

5. Verfahren nach einem der Ansprüche 1 bis 4, dadurch gekennzeichnet, daß die Granulate in einem Preßverfahren verarbeitet werden, wobei die gewünschte Schärfe der Farbtrennung an der Grenzfläche verschiedenfarbiger Bereiche der Keramikteile durch Einstellung der Preßbedingungen erzeugt werden kann.

6. Verfahren nach einem der Ansprüche 1 bis 5, dadurch gekennzeichnet, daß die geformten, entbinderten Keramikteile in Luft, in Inertgasatmosphäre, in reduzierender oder oxidierender Atmosphäre oder im Vakuum versintert werden.

7. Mehrfarbige Keramikformteile, hergestellt nach einem Verfahren der Ansprüche 1 bis 6, dadurch gekennzeichnet, daß sie als dekorative Teile ausgebildet sind.

8. Keramikformteilgrünlinge, hergestellt nach einem Verfahren der Ansprüche 1 bis 6, dadurch gekennzeichnet, daß sie geformt, jedoch nicht entbindert und versintert sind.

## Claims

1. A process for producing polychrome ceramic shaped parts from at least 2 granulates each comprising ceramic powder, color-producing particles and optionally binder, in which process the granulates are shaped, optionally subjected to binder removal and sintered, wherein both granulates contain binders from the group of the polyacetals, which in at least one of the granulates are present in a proportion of from 30 to 60% by volume of the granulate, as well as different color-producing particles and/or different concentrations of the same color-producing particles.

2. A process as claimed in claim 1, wherein in at least one of the granulates the color-producing particles are present in a proportion of from 0.05 to 20% by weight.

3. A process as claimed in one of claims 1 or 2, wherein in at least one of the granulates the color-producing particles have particle sizes of below 10 µm.

4. A process as claimed in one of claims 1 to 3, wherein the granulates are processed by multicomponent injection molding.

5. A process as claimed in one of claims 1 to 4, wherein the granulates are processed by pressing, it being possible for the desired sharpness of the color separation at the interface between differently colored regions of the ceramic parts to be produced by adjusting the pressing conditions.

6. A process as claimed in one of claims 1 to 5, wherein the shaped ceramic parts from which the binder has been removed are sintered in air, in an inert gas atmosphere, in a reducing or oxidizing atmosphere or under reduced pressure.

7. A polychrome ceramic shaped part produced by a process of claims 1 to 6, which is configured as a decorative part.

8. An unfired ceramic shaped part produced by a process of claims 1 to 6 which is shaped, but not subjected to binder removal and sintered.

## Revendications

1. Procédé de préparation de corps faconnés céramiques polychromes à partir d'au moins 2 granulats contenant à chaque fois de la poudre de céramique, des particules pigmentaires et éventuellement un liant, où le granulat est formé, éventuellement délié et fritté, caractérisé en ce que les deux granulats contiennent à la fois un liant choisi dans le groupe des polyacétals comprenant dans au moins l'un des granulats une fraction de granulat de 30 à 60% en volume, et des particules de différentes couleurs et/ou différentes concentrations desdites particules colorantes.

2. Procédé selon la revendication 1, caractérisé en ce que l'un au moins des granulats contient les particules colorantes à raison de 0,05 à 20% en poids.

3. Procédé selon l'une des revendications 1 ou 2, caractérisé en ce que, dans l'un des granulats au moins, les particules colorantes possèdent une granulométrie inférieure à 10 µm.

4. Procédé selon l'une de revendications 1 à 3, caractérisé en ce que les granulats sont traités par un procédé de moulage par injection multicomposant.

5. Procédé selon l'une des revendications 1 à 4, caractérisé en ce que les granulats sont traités par un procédé de pressage, qui permet de réaliser la séparation précise des couleurs à l'interface de différentes plages colorées par sélection des conditions de pressage.

6. Procédé selon l'une des revendications 1 à 5, caractérisé en ce que les éléments céramiques formés sont frittés sous atmosphère d'air, de gaz inerte ou sous atmosphère oxydante ou réductrice, ou encore sous vide.

7. Corps céramiques façonnés polychromes, préparés selon le procédé selon les revendications 1 à 6, caractérisé en ce qu'ils sont réalisés en tant qu'éléments décoratifs.

8. Eléments de corps façonnés, préparés par le procédé selon les revendications 1 à 6, caractérisés en ce qu'ils sont réalisés par formage, mais sans déliage ni frittage.
